(19) Europäisches Patentamt
European Patent Office
Office européen des brevets

(11) **EP 3 949 758 B1**

(12) **EUROPEAN PATENT SPECIFICATION**

(45) Date of publication and mention
of the grant of the patent:
**30.08.2023 Bulletin 2023/35**

(21) Application number: **19923517.7**

(22) Date of filing: **29.03.2019**

(51) International Patent Classification (IPC):
**A23L 27/20** (2016.01)

(52) Cooperative Patent Classification (CPC):
**A23L 33/125; A23L 19/03; A23L 19/09;
A23L 27/2022; A23L 29/30**

(86) International application number:
**PCT/JP2019/014255**

(87) International publication number:
**WO 2020/202348 (08.10.2020 Gazette 2020/41)**

(54) **VEGETABLE SOLID-CONTAINING SEASONED FOOD HAVING TANGY TASTE, METHOD FOR PRODUCING SAME, AND METHOD FOR IMPARTING TANGY TASTE TO VEGETABLE SOLID-CONTAINING SEASONED FOOD**

PFLANZLICHEN FESTSTOFF ENTHALTENDES GEWÜRZTES NAHRUNGSMITTEL, VERFAHREN ZU SEINER HERSTELLUNG UND VERFAHREN ZUR VERLEIHUNG EINES WÜRZIGEN GESCHMACKS FÜR PFLANZLICHEN FESTSTOFF ENTHALTENDES GEWÜRZTES NAHRUNGSMITTEL

ALIMENT ASSAISONNÉ CONTENANT UN SOLIDE VÉGÉTAL ET AYANT UN GOÛT ACIDULÉ, SON PROCÉDÉ DE PRODUCTION, ET PROCÉDÉ DESTINÉ À CONFÉRER UN GOÛT ACIDULÉ À UN ALIMENT ASSAISONNÉ CONTENANT UN SOLIDE VÉGÉTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.02.2022 Bulletin 2022/06**

(73) Proprietor: **Mizkan Holdings Co., Ltd.
Handa-shi, Aichi 475-8585 (JP)**

(72) Inventor: **ONO, Takeshi
Handa-shi, Aichi 475-8585 (JP)**

(74) Representative: **Mewburn Ellis LLP
Aurora Building
Counterslip
Bristol BS1 6BX (GB)**

(56) References cited:
JP-A- 2005 015 684    JP-A- 2010 142 147
JP-A- 2011 223 998    JP-A- 2015 053 886
KR-B1- 101 853 439    US-A- 4 472 446

• Yukiko Tokitomo: "Volatile Components of Cooked Onions", Journal of Japanese society of food science and technology, vol. 42, no. 4, 15 April 1995 (1995-04-15) , pages 279-287, XP055748442, JP ISSN: 1341-027X, DOI: 10.3136/nskkk.42.279

**Description**

TECHNICAL FIELD

The present invention relates to a seasoned food containing vegetable solids having tangy taste and a method for producing the same, as well as a method for imparting tangy taste to a seasoned food containing vegetable solids.

BACKGROUND ART

Vegetables are widely used for seasoned foods because of their mellow aroma and taste contributing to the overall flavor of the seasoned foods. Seasoning foods having a high vegetable content and containing vegetable solids remaining intact are popular to consumers, especially due to their good texture. However, simply increasing the amount of vegetable blended into the product leads to the problem that off-flavors such as vegetablespecific raw odor and sulfur odor can be perceived, resulting in a decrease in preference.

There have been various research reports on how such off-flavors derived from vegetable can be reduced. For example, JP2017-042070 (A1) (Patent Literature 1) describes that a vegetable fermented extract with excellent flavor and taste can be obtained via fermentation with two types of microorganisms, i.e., yeast and koji (rice malt). According to this document, odor substances that give the impression of spoilage generated by yeast fermentation can be suppressed, and unfavorable tastes such as raw taste and acrid taste originating from vegetable materials can be removed, while the natural taste and odor of the vegetable are retained.

As another example, JP2010-142147 (A1) (Patent Literature 2) describes a method for providing foods with natural and desirable sweetness and richness, especially strong sweetness unique to heated onion, by adding a specific onion extract which is rich in aromatic components that contribute to imparting to foods the natural and desirable sweetness and richness, especially strong sweetness unique to heated onion, and which does not contain unfavorable taste that interferes with the sweetness. KR 101 853 439 B1 discloses a chicken taste seasoning, comprising various vegetable solids such as from onions, and a composition named FM016 comprising dipropyl disulfide and 5-methyl-2-furfural.

However, the former invention is challenged by its complicated process including a series of multiple fermentation processes, while the latter invention cannot address the problem of suppressing vegetable off-flavors in general since a flavor specific to heated onion is imparted.

CITATION LIST

PATENT LITERATURE

[Patent Literature 1] JP2017-042070 (A1)
[Patent Literature 2] JP2010-142147 (A1)

SUMMARY OF INVENTION

TECHNICAL PROBLEM

An objective of the present invention is to provide a seasoned food containing vegetable solids not only having reduced off-flavors derived from vegetable but also having tangy taste.

SOLUTION TO PROBLEM

Having conducted a variety of investigations, the present inventors have finally found that when the contents of dipropyl disulfide and 5-methyl-2-furfural in a seasoned food containing vegetable solids are adjusted to within specific ranges, it becomes possible not only to reduce the off-flavors derived from vegetable but also to impart tangy taste to the seasoned food, whereby consumer preference to the seasoned food can be improved greatly.

EFFECTS

According to the present invention, it is possible to prepare an improved seasoned food containing vegetable solids in which not only the off-flavors of vegetable origin are reduced, but also tangy taste is imparted, by simply incorporating specific contents of dipropyl disulfide and 5-methyl-2-furfural into an ordinary seasoned food containing vegetable solids. The invention is described in the appended claims.

The means for incorporating the specific ingredients above into a seasoned food is not limited, and may be either adding substances containing dipropyl disulfide and 5-methyl-2-furfural to the seasoned food or generating dipropyl disulfide and 5-methyl-2-furfural by heating in the production process.

EMBODIMENTS

The present invention will now be described in detail with reference to specific embodiments.

In the description below, dipropyl disulfide, 5-methyl-2-furfural, and borneol may be collectively referred to as "specific ingredients."

The seasoned food containing vegetable solids being the subject of the present invention (hereinafter also referred to as "the seasoned food of the present invention") contains vegetable solids. There is no limitation to the vegetable solids to be contained, which may be solids of vegetables of, e.g., daikon radish, carrot, gobo (burdock root), rutabaga, beet (preferably beetroot: a variety of beet whose roots have been modified to be edible), parsnip, turnip, sweet potato, cassava, yacon, taro, satoimo (Japanese taro), konjac, lotus root, potato, purple sweet potato, sunchoke, kuwai (arrowhead tuber), shallot, garlic, rakkyo (Japanese shallot), yurine (lily bulb), katakuri (Asian fawnlily), kale, yam, yamanoimo (Japanese mountain yam), nagaimo (Chinese yam), onion, asparagus, udo (Aralia cordata), cabbage, lettuce, spinach, napa (Chinese cabbage), aburana (field mastard), komatsuna (Japanese mustard spinach), bok choy, nira (Chinese chive), negi (Welsh onion), nozawana (Brassica rapa var. hakabura), leek, fuki (butterbur), mizuna (Brassica rapa var. niposinica), tomato, eggplant, pumpkin, green pepper, cucumber, myoga (Japanese ginger), cauliflower, broccoli, goya (bitter gourd), okra, artichoke, zucchini, sugar beet, ginger, shiso (Japanese basil), paprika . The vegetable solids may be derived either from a single vegetable or from a mixture of two or more vegetables.

The present invention can exhibit its advantageous effects when it is applied to, e.g., vegetables belonging to Apiaceae, Brassicaceae, and Allium. Examples of vegetables belonging to Apiaceae include water celery (Japanese parsley), celery, carrot, parsley, dill, and ashitaba (Angelica keiskei). Examples of vegetables belonging to Brassicaceae include horseradish, rocket, cabbage, daikon radish, rutabaga, komatsuna (Japanese mustard spinach), broccoli, napa (Chinese cabbage), bok choy, karashina (vegetable mastard leaf). Examples of vegetables belonging to Allium include onion, negi (Welsh onion), leek, and garlic . Especially preferred vegetables among them are those belonging to Allium.

The content of vegetable solids in the seasoned food of the present invention may preferably be 35 % by mass or more, with 40% or more being preferred. If the content is below the lower limit mentioned above, the vegetable may not be sufficiently felt. On the other hand, the content of vegetable solids in the seasoned food of the present invention may preferably be 70% or less, more preferably 60% or less. If the content exceeds the upper limit mentioned above, the raw vegetable odor may be too strong and the off-flavors may not be sufficiently reduced.

Vegetable can be used not only in a solid form as described above, but also in a processed form such as pulverized product, puree, and paste.

There are no particular restrictions on the materials other than vegetable that can be added to the seasoned food containing vegetable solids. Examples of such non-vegetable materials include plant-derived ingredients such as spices and herbs, sugars, high intensity sweeteners, amino acid seasonings, nucleic acid seasonings, organic acid seasonings, flavor ingredients, flavor enhancers, alcoholic beverages, flavoring oils, flavors, spice extracts and other flavor and taste components, viscosity regulators, stabilizers, pH regulators, colorants, and other additives. The contents of these components are not particularly limited, and can be determined according to their uses.

As mentioned above, there are no restrictions on the sugars to be used. However, the total content of the three specific sugars, i.e., sucrose, glucose, and fructose, in the seasoned food may preferably be adjusted to typically 20 % by mass or more, especially 25 % by mass or more. Adjusting the total content of these three specific sugars above the aforementioned lower limit may preferably serve to impart a refreshing sweetness and also to alleviate off-flavors of vegetable. On the other hand, the total content of these three specific sugars in the seasoned food may preferably be 45 % by mass or less, and especially 40 % by mass or less.

In addition, the ratio of sucrose to the total amount of these three specific sugars mentioned above may typically be less than 33 mass%, especially less than 30 mass%. Adjusting the total content of these three specific sugars less than the above-mentioned upper limit may preferably lead to the advantage of providing a balanced sweetness in both the initial taste and aftertaste. On the other hand, the lower limit of sucrose is not particularly limited, but usually may be 0 mass% or more.

Although the ratios of the three specific sugars may be adjusted by adding the respective sugars, but it is more desirable to use sucrose as an additive source and have it decompose into glucose and fructose by heating to produce multiple flavor components, since this contributes to tangy taste.

Spices that can be used for the seasoned food containing vegetable solids are not particularly limited, but may include chili pepper, red pepper, black pepper, cayenne pepper, white pepper, pink pepper, sansho (Japanese pepper), long pepper, wasabi (Japanese horseradish), mustard, ginger, horseradish, citrus peel, nutmeg, cinnamon, paprika, cardamom, garlic, cumin, turmeric, coriander seed, saffron, allspice, cloves, shiso (Japanese basil), fennel, licorice, dill seed, and olive fruit. These may be used either singly or in combination of any two or more.

The seasoned food containing vegetable solids can be produced by mixing vegetable solids and other materials in a conventional manner, and then heating the mixture. The mixing with seasonings can be done either by heating all the materials at the same time or by heating some of the materials separately.

The seasoned food product containing vegetable solids is characterized by containing dipropyl disulfide and 5-methyl-2-furfural, each within the predetermined content ranges mentioned below. Incorporating dipropyl disulfide and 5-methyl-2-furfural into the seasoned food of the present invention each within the following content ranges serves not only to reduce vegetable-derived off-flavors but also to impart tangy taste to the seasoned food.

The method for incorporating dipropyl disulfide and 5-methyl-2-furfural into the seasoned food containing vegetable solids may be to add dipropyl disulfide and 5-methyl-2-furfural as single substances. It is preferable, however, to produce dipropyl disulfide and 5-methyl-2-furfural during the heating process, since this method also serves to produce other flavor components involved in the tangy taste.

The lower limit of the content (x) of dipropyl disulfide in the seasoned food of the present invention is 0.7 mg/kg or more, preferably 1.0 mg/kg or more. If the content (x) of dipropyl disulfide is less than the lower limit, a punchy, tangy taste may not be presented.

The upper limit of the content (x) of dipropyl disulfide in the seasoned food of the present invention is 5.0 mg/kg or less, preferably 4.0 mg/kg or less. If the content (x) of dipropyl disulfide exceeds the above-mentioned upper limit, the pungent odor of vegetable origin may become stronger than tangy taste, whereby the overall flavor may become unpleasant..

The lower limit of the content (y) of 5-methyl-2-furfural in the seasoned food of the present invention is 0.4 mg/kg or more, preferably 0.5 mg/kg or more. If the content (y) of 5-methyl-2-furfural is less than the lower limit, the raw vegetable odor may not be fully suppressed.

The upper limit of the content (y) of 5-methyl-2-furfural in the seasoned food of the present invention is be 10 mg/kg or less, preferably 5.0 mg/kg or less, more preferably 3.0 mg/kg or less. If the content (y) of 5-methyl-2-furfural exceeds the above upper limit, the aroma of 5-methyl-2-furfural itself may strongly be perceived and render the overall flavor unpleasant.

The lower limit of the content ratio of dipropyl disulfide (x) to 5-methyl-2-furfural (y) in the seasoned food product of the present invention, i.e., the value of x/y, may typically be 1.0 or higher, is preferably 1.5 or higher. If the value of x/y is lower than the lower limit, the content of 5-methyl-2-furfural may be too high compared to the content of dipropyl disulfide and cancel out the effect of dipropyl disulfide in imparting tangy taste.

On the other hand, the upper limit of the content ratio of dipropyl disulfide (x) to 5-methyl-2-furfural (y) in the seasoned food product of the present invention, i.e., the value of x/y, may typically be 5.0 or less, especially 4.5 or less. If the value of x/y exceeds the upper limit, the content of dipropyl disulfide may be too high compared to the content of 5-methyl-2-furfural, so that pungent odor caused by the dipropyl disulfide may be perceived.

The seasoned food product of the present invention may preferably further contain borneol. When the seasoned food product of the present invention contains borneol, the lower limit of the content (z) of borneol may typically be 0.01 mg/kg or more, preferably 0.02 mg/kg or more, more preferably 0.035 mg/kg or more. If the content (z) of borneol is less than the lower limit, a gorgeous flavor that reinforces the rich taste may not be sufficiently imparted.

On the other hand, the upper limit of the content (z) of borneol in the seasoned food of the present invention may typically be 0.10 mg/kg or less, preferably 0.09 mg/kg or less, more preferably 0.07 mg/kg or less. If the content (z) of borneol exceeds the above upper limit, the aroma of borneol itself may be strongly perceived, which may cause discomfort in the flavor

When the seasoned food product of the present invention contains borneol, the lower limit of the content ratio of dipropyl disulfide (x) to borneol (z), i.e., the value of x/z, may typically be 15 or more, preferably 19 or more. If the x/z value is lower than the lower limit, the borneol content may be too high compared to the dipropyl disulfide content, so that the floral flavor of borneol may interfere with the effect of the dipropyl disulfide in imparting tangy taste.

On the other hand, the upper limit of the content ratio of dipropyl disulfide (x) to borneol (z), i.e., the value of x/z, may typically be 220 or less, preferably 200 or less. If the value of x/z exceeds the above-mentioned upper limit, the content of dipropyl disulfide may be too high compared to the content of borneol, so that the good flavor balance of the vegetable-containing seasoned food may be lost.

The contents of dipropyl disulfide, 5-methyl-2-furfural, and borneol in a seasoned food herein can be measured by any conventional method for measuring flavor components, an example of which method is a measurement method using gas chromatography/mass spectrometry (GC/MS).

The sugar content in a seasoned food containing vegetable solids herein can be measured by any method as long as it can be used for measuring the contents of sugars individually, an example of which method is a measurement method using high performance liquid chromatography (HPLC).

The content of vegetable solids in a seasoned food containing vegetable solids herein can be measured by placing the seasoned food on a sieve with a mesh size of 7.5 (mesh opening: 2.36 mm), removing the liquid portion of the seasoned food with water, and measuring the mass of the vegetable solids on the sieve.

EXAMPLES

The present invention will be described hereinafter in more detail with reference to specific Examples, which are presented merely for convenience of explanation, and the present invention should not be limited to these Examples in any way.

[Preparation of seasoned foods containing vegetable solids]

Seasoned food products containing vegetable solids were prepared as Examples a1 to a10 and as Comparative Examples b1 to b8. The summary of the prepared seasoned foods containing vegetable solids according to the Examples and the Comparative Examples is shown in Table 1 below.

[Table 1]

Table 1

|  | Specific ingredients added? |
|---|---|
| Example a1 | Yes |
| Example a2 | No |
| Example a3 | No |
| Example a4 | No |
| Example a5 | No |
| Example a6 | Yes |
| Example a7 | Yes |
| Example a8 | Yes |
| Example a9 | No |
| Example a10 | No |
| Comparative Example b 1 | Yes |
| Comparative Example b2 | Yes |
| Comparative Example b3 | Yes |
| Comparative Example b4 | Yes |
| Comparative Example b5 | Yes |
| Comparative Example b6 | No |
| Comparative Example b7 | No |
| Comparative Example b8 | No |

Preparation of Examples a2 to a5, a9, a10, and Comparative Examples b6 to b8, which does not involve addition of specific ingredients, was carried out as follows.

*Preparation of Examples a2, a3, a4, a9, and a10:

1. 510 g of carrot, 500 g of rutabaga, 87 g of cauliflower, and 320 g of onion were cut into 10 mm size cubes as vegetable solids.

2. The vegetable solids prepared in item 1 above were placed in a pot along with 1300 g of syrup (35 % by mass of sugar and 7 % by mass of salt), prepared according to the composition shown in Table 1, and heated at 80°C until the vegetables were fully cooked.

3. The vegetable solids heat-treated in item 2 above, in an amount of 760g, was mixed, before cooled down, with 520g of syrup and sauce (which was prepared by mixing 8% by mass of date paste, 1% by mass of spice mix, 0.5% by mass of lemon juice, 3% by mass of tomato paste, 24% by mass of sugar, and 4% by mass of starch, plus 10% by mass of the syrup described above, the remainder being vinegar and water to adjust the overall acetic acidity at 4%). Example a2 was kept at 60°C for 12 hours, Example a3 at 60°C for 24 hours, and Example a4 at 60°C for 3 days. Examples a9 and a10 were prepared so as to adjust the content of vegetable solids at 35% and 70% by mass, respectively, and then bottled and kept at 60°C for 3 days.

*Preparation of Example a5:

1 96 g of carrot, 290 g of rutabaga, 158 g of cauliflower, 430 g of onion and 50 g of gherkins were cut into 3 mm cubes as vegetable solids.

2. The vegetable solids prepared in item 1 above were placed in a pot along with 1300g of the syrup mentioned above, and heated at 80°C for 60 minutes.

3. The vegetable solids heat-treated in item 2 above, in an amount of 760g, was mixed, before cooled down, with 520 g of the syrup mentioned above and 720 g of the sauce mentioned above, and then bottled.

*Preparation of Comparative Example b6:

A seasoning solution (prepared by stir-mixing 36 g starch, 240 g liquid sugar (Brix value 67), 10 g spice mix, 67 g vinegar (acetic acid acidity: 8.5%), 100 g vinegar (acetic acidity: 15%), and 30 g water to dissolution) was combined with a vegetable solid mixture (containing 36 g each of cauliflower, carrot, onion, and rutabaga, cut into 9 mm size cubes), kept at 85°C, combined with 400 g of heated beet and stirred well before bottling.

*Preparation of Comparative Example b7:

1. 260 g of vegetable solids mixture 1 (vegetable solids prepared by mixing 55 % by mass of carrot and 45 % by mass of rutabaga cut into 10 mm cubes) was heated to 85°C in water.

2. The vegetable solid mixture 1 from item 1 above was combined with a slurry (prepared by stir-mixing 80 ml of vinegar (acetic acid acidity: 8.5%), 70 g of water, and 26 g of starch to dissolution) and mixed well while being kept at 85°C. The resulting mixture was then combined with 180 g of vegetable solid mixture 2 (vegetable solids prepared by mixing 64% by mass of onion, 28% by mass of cauliflower, and 8% by mass of gherkin) and 340 g of red chili puree (containing 38 g of chili puree, 13 g of garlic puree, 7 ml of 80% acetic acid, 75 ml of liquid sugar (Brix value 67), 200 g of sugar, and 7 g of salt) and further mixed well while being kept at 85°C.

3. The mixture from item 2 above was then mixed with 72 g of tomato paste while kept at 85°C, and then bottled.

*Preparation of Comparative Example b8:

1. 300 g of vegetable solid mixture 1 (prepared by mixing 50 % by mass of carrot and 50% by mass of rutabaga cut into 10 mm size cubes as vegetable solids) was heated to 85°C in water.

2. The vegetable solid mixture 1 from item 1 above was combined with a slurry (prepared by stir-mixing 90 g of vinegar (acetic acid acidity: 8.5%), 170 g of water, and 28 g of starch to dissolution) and mixed well while being kept at 85°C.

3. The mixture from item 2 above was combined with 220g of vegetable solid mixture 2 (prepared by mixing 132g of onion, 62g of cauliflower, 12g of gherkin, and 14g of zucchini cut into 10mm size cubes as vegetable solids) and seasoning solution (containing 8ml of 80% acetic acid, 95g of liquid sugar (Brix value 67), 95g of 1 g of spice mix, 200 g of sugar, and 14 g of tomato paste) and mixed thoroughly via stirring at 85°C, and then bottled.

*Preparation of seasoned foods to which specific ingredients were added:

Preparation of Examples a1 and a6 to a8 and Comparative Examples b1 to b5, which involves addition of specific ingredients, was carried out using the substances shown below as the specific ingredients, by adding the specific ingredients diluted with ethanol to a higher concentration so as to achieve the final concentrations indicated in Table 2 below.

- Dipropyl disulfide (CAS No.629-19-6, Tokyo Kasei Kogyo Co., Ltd.)
- 5-methyl-2-furfural (CAS No.620-02-0, Tokyo Kasei Kogyo Co., Ltd.)
- Borneol (CAS No.507-70-0, Wako Pure Chemical Industries, Ltd.)

[Table 2]

Table 2

| Seasoning food containing vegetable solids prepared by adding specific ingredients | Seasoning food containing vegetable solids to which specific ingredients were added | Amounts of specific ingredients added (mg/kg) | | |
| --- | --- | --- | --- | --- |
| | | Dipropyl disulfide | 5-methyl-2-furfural | Borneol |
| Example a1 | b6 | 0.53 | 0.32 | 0.01 |
| Example a6 | a5 | 1.39 | | |
| Example a7 | a5 | | 8.90 | |
| Example a8 | a5 | | | 0.07 |
| Comparative Example b1 | b6 | 9.83 | 0.92 | |
| Comparative Example b2 | b6 | 2.33 | 12.42 | |
| Comparative Example b3 | a4 | 12.40 | | |
| Comparative Example b4 | b6 | | 0.92 | |
| Comparative Example b5 | a5 | | 13.90 | |

[Measurement of the contents of ingredients]

The following procedure was used to measure the contents of various components.

*Measurement of sugar contents:

The measurement of the sugar contents in a seasoned food containing vegetable solids was carried out using a liquid portion of the seasoning liquid of the seasoned food by diluting it with water so that the amount of the most abundant sugar becomes roughly 1% by mass or less, filtering it through a 0.45 μm filter, and subjecting the filtrate as a sample to HPLC measurement.
The HPLC measurement was carried out using Prominence (Shimadzu Corporation) as the HPLC system, HILICpak VG-50 4E HPLC as the HPLC column, and 80% acetonitrile as the mobile phase, and detection was performed with a differential refractometer (Shodex RI-201H).
Standard samples were prepared by diluting fructose (Sigma-Aldrich), glucose (Sigma-Aldrich), and sucrose (Sigma-Aldrich) with water.
The actual measurement values obtained were standardized according to the dilution ratio of the samples.

* Measurement of the contents of vegetable solids:

The measurement of the contents of vegetable solids was carried out in accordance with the following manner.

1. 100g of the seasoned food containing vegetable solids (hereinafter referred to as a sample) was measured with a precision scale.

2. The sample was poured onto a sieve having a mesh size of 7.5 (mesh opening: 2.36 mm) and was spread evenly.

3. After the sample was spread evenly, the mesh with the vegetable solids remaining thereon was dipped three times into a metal bowl filled with enough water to cover the entire mesh, to wash away the seasoning solution adhering to the vegetable solids.

4. The vegetable solids remaining on the sieve were collected on a paper wiper (Kimtowel; Nippon Paper Crecia), and the water on its surface was thoroughly wiped off before the mass of the vegetable solids was measured.

*Measurement of the contents of dipropyl disulfide, 5-methyl-2-furfural, and borneol:

The measurement of the contents of the specific ingredients, i.e., dipropyl disulfide, 5-methyl-2-furfural, and borneol, was carried out using gas chromatography/mass spectrometry (GC/MS) in the following manner.

1. 1 g of the liquid portion of the seasoned food containing vegetable solids was taken as the measurement sample, which was then mixed with 1 g of sodium chloride and 3 mL of water.

2. The sample was combined with 4 ml of dichloromethane, to which 10 mg/L each of 1-pentanol and 1-decanol had been added as internal standards, and then shaken for 20 minutes.

3. After centrifugation (3,000 rpm, 10 minutes), the lower layer of dichloromethane was collected, dehydrated with sodium sulfate, and used as the measurement sample.

4. Standard solutions were prepared by dissolving each of the standard substances (dipropyl disulfide, 5-methyl-2-furfural, and borneol) into the dichloromethane containing the internal standards mentioned above to thereby adjust the contents of the standard substance to within the range of 0.01-100 mg/L.

The measurement sample in an amount of 1 $\mu$L was injected into the gas chromatography/mass spectrometer by pulsed split injection method. An HP6890 Series GC System (Agilent) was used as the gas chromatography analyzer, and the capillary columns used were DB-WAX (30 m (x), 250 $\mu$m (x), 0.25 $\mu$m) and DB-5MS (3 0 m (x), 250 $\mu$m (x), 0.25 $\mu$m). The temperature of the sample inlet of the gas chromatography analyzer was set at 250°C. Helium gas was used as the mobile phase, and the column temperature was raised in the following manner.

<Column oven conditions for DB-WAX>

Hold at 40°C for 3 minutes --> Raise temperature at 10°C/minute --> Hold at 250°C for 6 minutes

<Column oven conditions for DB-5MS>

Hold at 40°C for 3 minutes --> Raise temperature at 10°C/minute --> Hold at 300°C for 6 minutes

Each measured sample was measured using the selective ion detection (SIM) mode, and the contents of the specific ingredients were calculated using the internal standard method from the area of the quantitative ions of the compounds listed in Table 3 below.

[Table 3]

Table 3

|  | Quantification ion | Confirmation ion 1 | Confirmation ion 2 |
|---|---|---|---|
| Dipropyl disulfide | 150 | 108 | 43 |
| 5-methyl-2 -furfural | 110 | 109 | 53 |
| Borneol | 95 | 110 | 139 |

Peaks whose ratio of the peak signal to the base noise (S/N ratio) of less than 10 were classified as non-detectable (ND) since the noise was so large that quantification was difficult.

The measurement results of the contents of vegetable solids and sugar for each of the Examples and Comparative examples are shown in Table 4 below, and the measurement results of the content of the specific ingredients, dipropyl disulfide, 5-methyl-2-furfural, and borneol, are shown in Table 5 below.

[Table 4]

Table 4

| | Contents of vegetable solids | Fructose | Glucose | Sucrose | Total sugar content | Ratio of sucrose to total sugar content |
|---|---|---|---|---|---|---|
| | % by mass | % by mass | % by mass | % by mass | % by mass | |
| Example a1 | 49 | 8.0 | 9.0 | 1.7 | 18.6 | 0.09 |
| Example a2 | 54 | 11.4 | 11.9 | 6.5 | 29.8 | 0.22 |
| Example a3 | 54 | 12.2 | 13.0 | 4.0 | 29.1 | 0.14 |
| Example a4 | 54 | 13.8 | 15.0 | 3.2 | 31.9 | 0.10 |
| Example a5 | 51 | 15.4 | 16.6 | nd | 32.1 | 0.00 |
| Example a6 | 51 | 15.4 | 16.6 | nd | 32.1 | 0.00 |
| Example a7 | 51 | 15.4 | 16.6 | nd | 32.1 | 0.00 |
| Example a8 | 51 | 15.4 | 16.6 | nd | 32.1 | 0.00 |
| Example a9 | 35 | 13.8 | 15.0 | 3.2 | 31.9 | 0.10 |
| Example a10 | 70 | 13.8 | 15.0 | 3.2 | 31.9 | 0.10 |
| Comparative Example b1 | 49 | 8.0 | 9.0 | 1.7 | 18.6 | 0.09 |
| Comparative Example b2 | 49 | 8.0 | 9.0 | 1.7 | 18.6 | 0.09 |
| Comparative Example b3 | 54 | 13.8 | 15.0 | 3.2 | 31.9 | 0.10 |
| Comparative Example b4 | 49 | 8.0 | 9.0 | 1.7 | 18.6 | 0.09 |
| Comparative Example b5 | 51 | 15.4 | 16.6 | nd | 32.1 | 0.00 |
| Comparative Example b6 | 49 | 8.0 | 9.0 | 1.7 | 18.6 | 0.09 |
| Comparative Example b7 | 49 | 12.2 | 13.4 | 3.4 | 29.0 | 0.12 |
| Comparative Example b8 | 44 | 8.5 | 8.6 | 7.5 | 24.6 | 0.31 |

[Table 5]

Table 5

| | Dipropyl disulfide (x) | 5-methyl-2-furfural (y) | x/y | borneol (z) | x/z |
|---|---|---|---|---|---|
| | mg/kg | mg/kg | | mg/kg | |
| Example a1 | 0.70 | 0.40 | 1.8 | 0.01 | 70.0 |
| Example a2 | 1.14 | 0.49 | 2.3 | 0.053 | 21.6 |

(continued)

|  | Dipropyl disulfide (x) | 5-methyl-2-furfural (y) | x/y | borneol (z) | x/z |
|---|---|---|---|---|---|
|  | mg/kg | mg/kg |  | mg/kg |  |
| Example a3 | 1.48 | 0.58 | 2.5 | 0.067 | 21.9 |
| Example a4 | 2.60 | 0.60 | 4.3 | 0.055 | 47.1 |
| Example a5 | 3.61 | 1.10 | 3.3 | 0.025 | 143.2 |
| Example a6 | 5.00 | 1.10 | 4.6 | 0.025 | 198.4 |
| Example a7 | 3.61 | 10.00 | 0.4 | 0.025 | 143.2 |
| Example a8 | 3.61 | 1.10 | 3.3 | 0.100 | 36.1 |
| Example a9 | 2.60 | 0.60 | 4.3 | 0.055 | 47.1 |
| Example a10 | 2.60 | 0.60 | 4.3 | 0.055 | 47.1 |
| Comparative Example b1 | 10.00 | 1.00 | 10.0 | 0.001 | 14285.7 |
| Comparative Example b2 | 2.50 | 12.50 | 0.2 | 0.001 | 3571.4 |
| Comparative Example b3 | 15.00 | 0.60 | 25.1 | 0.055 | 271.7 |
| Comparative Example b4 | 0.17 | 1.00 | 0.2 | 0.001 | 249.6 |
| Comparative Example b5 | 3.61 | 15.00 | 0.2 | 0.025 | 143.2 |
| Comparative Example b6 | 0.17 | 0.08 | 2.1 | 0.001 | 249.6 |
| Comparative Example b7 | 7.24 | 0.15 | 48.8 | 0.194 | 37.3 |
| Comparative Example b8 | 0.84 | 0.10 | 8.7 | 0.006 | 140.0 |

[Sensory evaluation]

The evaluation of each sample was conducted under the following conditions. Each evaluation was carried out with six sensory examiners who had undergone the training explained below. Their average scores, rounded to the nearest whole number, are listed in Table 1.

Sensory examiners were subjected to the discrimination trainings indicated in A) and B) below, and those with particularly excellent performance were selected.

(A) Taste discrimination test: samples of five tastes (sweetness: taste of sugar, sourness: taste of tartaric acid, umami: taste of monosodium glutamate, saltiness: taste of sodium chloride, and bitterness: taste of caffeine) were prepared as aqueous solutions of the corresponding ingredients each at a concentration slightly higher than its threshold value, and trainees were instructed to identify the sample of each of the five tastes from a total of seven samples, which consists of the five sample solutions and two distilled water.
(B) Concentration discrimination test: for each of sodium chloride and acetic acid, a series of five aqueous solutions having slightly different concentrations was prepared, and trainees were instructed to identify the difference in concentrations between the solutions in each series.

The items for the sensory evaluation are indicated below.
*Tangy taste

5: Tangy taste is felt strongly, very favorable.
4: Tangy taste is felt well, favorable.
3: tangy taste is felt.
2: tangy taste is hardly felt, unfavorable.
1: tangy taste is not felt at all, very unfavorable.

*Raw vegetable odor and pungent odor

5: Raw vegetable odor or pungent odor is hardly felt, very favorable.

4: Raw vegetable odor or pungent odor is felt only weakly, favorable.
3: Raw vegetable odor or pungent odor is felt.
2: Raw vegetable odor or pungent odor is felt considerably, unfavorable.
1: Raw vegetable odor or pungent odor is felt strongly, very unfavorable.

The results of the sensory evaluation are shown in Table 6 below.
As for the Examples, the evaluation scores of the tangy taste and the raw vegetable odor and pungent odor were all 3 or higher, indicating that not only were the off-flavors of vegetable origin reduced but also the tangy taste was given. As for the Comparative Examples, no favorable results were obtained, since the tangy taste was not sufficient, and the off-flavors from vegetable were perceived.

[Table 6]

Table 6

|  | Tangy taste | Raw vegetable odor, pungent odor |
|---|---|---|
|  | Score | Score |
| Example a1 | 3 | 3 |
| Example a2 | 5 | 5 |
| Example a3 | 5 | 5 |
| Example a4 | 5 | 5 |
| Example a5 | 5 | 5 |
| Example a6 | 4 | 4 |
| Example a7 | 4 | 4 |
| Example a8 | 5 | 4 |
| Example a9 | 4 | 4 |
| Example a10 | 3 | 3 |
| Comparative Example b1 | 1 | 2 |
| Comparative Example b2 | 2 | 2 |
| Comparative Example b3 | 2 | 2 |
| Comparative Example b4 | 1 | 2 |
| Comparative Example b5 | 2 | 2 |
| Comparative Example b6 | 1 | 1 |
| Comparative Example b7 | 2 | 2 |
| Comparative Example b8 | 2 | 1 |

**Claims**

1. A seasoned food containing vegetable solids comprising:

    (a) dipropyl disulfide (x) in an amount of from 0.7mg/kg to 5.0mg/kg; and
    (b) 5-methyl-2-furfural (y) in an amount of from 0.4mg/kg to 10mg/kg.

2. The seasoned food containing vegetable solids according to claim 1, wherein
    (c) the values (x) and (y) satisfies Formula 1 below.

$$1.0 \leqq x/y \leqq 5.0 \quad \text{(Formula 1)}$$

3. The seasoned food containing vegetable solids according to claim 1 or 2, further comprising:
   (d) borneol (z) in an amount of from 0.01 mg/kg to 0. 10mg/kg.

4. The seasoned food containing vegetable solids according to any one of claims 1 to 3, wherein
   (e) the values (x) and (z) satisfies Formula 2 below.

$$15 \leqq x/z \leqq 220 \quad \text{(Formula 2)}$$

5. The seasoned food containing vegetable solids according to any one of claims 1 to 4, wherein
   (f) the content of the vegetable solids in the seasoned food is in a range of from 35% by mass to 70% by mass.

6. The seasoned food containing vegetable solids according to any one of claims 1 to 5, wherein
   (g) the total content of sucrose, glucose, and fructose in the seasoned food is in a range of from 20% by mass to 45% by mass.

7. The seasoned food containing vegetable solids according to claim 6, wherein
   (h) the ratio of the content of sucrose to the total content of sucrose, glucose, and fructose is in a range of 0% by mass or higher and less than 33% by mass.

8. The seasoned food containing vegetable solids according to any one of claims 1 to 7, wherein
   (i) the vegetable solids comprise solids of one or more vegetables selected from the group consisting of Allium, Apiaceae, and Brassicaceae.

9. A method of (i) producing a seasoned food containing vegetable solids or (ii) providing a seasoned food containing vegetable solids with tangy taste, comprising adjusting the seasoned food so as to comprise:

   (a) dipropyl disulfide (x) in an amount of from 0.7mg/kg to 5.0mg/kg; and
   (b) 5-methyl-2-furfural (y) in an amount of from 0.4mg/kg to 10mg/kg.

**Patentansprüche**

1. Gewürztes, pflanzliche Feststoffe enthaltendes Lebensmittel, welches aufweist:

   (a) Dipropyldisulfid (x) in einer Menge von 0,7 mg/kg bis 5,0 mg/kg, und
   (b) 5-Methyl-2-Furfural (y) in einer Menge von 0,4 mg/kg bis 10 mg/kg.

2. Gewürztes, pflanzliche Feststoffe enthaltendes Lebensmittel nach Anspruch 1, wobei (c) die Werte (x) und (y) nachfolgende Gleichung 1 erfüllen. $1,0 \leq x/y \leq 5,0$ (Gleichung 1)

3. Gewürztes, pflanzliche Feststoffe enthaltendes Lebensmittel nach Anspruch 1 oder 2 enthält, welches ferner aufweist:
   (d) Borneol (z) in einer Menge von 0,01 mg/kg bis 0,10 mg/kg.

4. Gewürztes, pflanzliche Feststoffe enthaltendes Lebensmittel nach einem der Ansprüche 1 bis 3, wobei
   (e) die Werte (x) und (z) nachfolgende Gleichung 2 erfüllen. $15 \leq x/z \leq 220$ (Gleichung 2)

5. Gewürztes, pflanzliche Feststoffe enthaltendes Lebensmittel nach einem der Ansprüche 1 bis 4, wobei
   (f) der Gehalt an pflanzlichen Feststoffen in dem gewürzten Lebensmittel in einem Bereich von 35 Massenprozent bis 70 Massenprozent liegt.

6. Gewürztes, pflanzliche Feststoffe enthaltendes Lebensmittel nach einem der Ansprüche 1 bis 5, wobei
   (g) der Gesamtgehalt an Saccharose, Glucose und Fructose in dem gewürzten Lebensmittel in einem Bereich von 20 Massenprozent bis 45 Massenprozent liegt.

**7.** Gewürztes, pflanzliche Feststoffe enthaltendes Lebensmittel nach Anspruch 6, wobei
(h) das Verhältnis des Gehalts an Saccharose zum Gesamtgehalt an Saccharose, Glucose und Fructose in einem Bereich von 0 Massenprozent oder mehr und weniger als 33 Massenprozent liegt.

**8.** Gewürztes, pflanzliche Feststoffe enthaltendes Lebensmittel nach einem der Ansprüche 1 bis 7, wobei
(i) die pflanzlichen Feststoffe Feststoffe von einem oder mehreren Gemüsen umfassen, die aus der Gruppe ausgewählt worden sind, die Allium, Apiaceae und Brassicaceae umfasst.

**9.** Verfahren zum (i) Herstellen eines gewürzten, pflanzliche Feststoffe enthaltenden Lebensmittels, oder (ii) zum Bereitstellen eines gewürzten, pflanzliche Feststoffe enthaltenden Lebensmittels mit würzigem Geschmack, welches das Einstellen des gewürzten Lebensmittels umfasst, so dass es aufweist:

(a) Dipropyldisulfid (x) in einer Menge von 0,7 mg/kg bis 5,0 mg/kg, und
(b) 5-Methyl-2-Furfural (y) in einer Menge von 0,4 mg/kg bis 10 mg/kg.

## Revendications

**1.** Aliment assaisonné contenant des solides végétaux comprenant :

(a) du disulfure de dipropyle (x) dans une quantité de 0,7 mg/kg à 5,0 mg/kg ; et
(b) du 5-méthyl-2-furfural (y) dans une quantité de 0,4 mg/kg à 10 mg/kg.

**2.** Aliment assaisonné contenant des solides végétaux selon la revendication 1, dans lequel
(c) les valeurs (x) et (y) satisfont la formule 1 ci-dessous

$$1{,}0 \leq x/y \leq 5{,}0 \qquad \text{(Formule 1)}$$

**3.** Aliment assaisonné contenant des solides végétaux selon la revendication 1 ou 2, comprenant de plus :
(d) du bornéol (z) dans une quantité de 0,01 mg/kg à 0,10 mg/kg.

**4.** Aliment assaisonné contenant des solides végétaux selon l'une quelconque des revendications 1 à 3, dans lequel
(e) les valeurs (x) et (z) satisfont la formule 2 ci-dessous

$$15 \leq x/z \leq 220 \qquad \text{(Formule 2)}$$

**5.** Aliment assaisonné contenant des solides végétaux selon l'une quelconque des revendications 1 à 4, dans lequel
(f) la teneur des solides végétaux dans l'aliment assaisonné se trouve dans un intervalle de 35 % en masse à 70 % en masse.

**6.** Aliment assaisonné contenant des solides végétaux selon l'une quelconque des revendications 1 à 5, dans lequel
(g) la teneur totale en saccharose, glucose, et fructose dans l'aliment assaisonné se trouve dans un intervalle de 20 % en masse à 45 % en masse.

**7.** Aliment assaisonné contenant des solides végétaux selon la revendication 6, dans lequel
(h) le rapport de la teneur en saccharose à la teneur totale en saccharose, glucose, et fructose se trouve dans un intervalle de 0 % en mase ou supérieur et inférieur à 33 % en masse.

**8.** Aliment assaisonné contenant des solides végétaux selon l'une quelconque des revendications 1 à 7, dans lequel
(i) les solides végétaux comprennent des solides d'un ou plusieurs végétaux choisis dans le groupe consistant en Allium, Apiaceae, et Brassicaceae.

**9.** Procédé de (i) production d'un aliment assaisonné contenant des solides végétaux ou (ii) fourniture d'un aliment assaisonné contenant des solides végétaux avec un goût acidulé, comprenant l'ajustement de l'aliment assaisonné afin de comprendre :

(a) du disulfure de dipropyle (x) dans une quantité de 0,7 mg/kg à 5,0 mg/kg ; et

(b) du 5-méthyl-2-furfural (y) dans une quantité de 0,4 mg/kg à 10 mg/kg.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017042070 A
- JP 2010142147 A
- KR 101853439 B1

**Non-patent literature cited in the description**

- *CHEMICAL ABSTRACTS,* 629-19-6
- *CHEMICAL ABSTRACTS,* 620-02-0
- *CHEMICAL ABSTRACTS,* 507-70-0